# EUROPEAN PATENT APPLICATION

(11) **EP 2 640 102 A1**
(43) Date of publication of application: **18.09.2013**
(21) Application number: 11840677.6
(22) Date of filing: 02.11.2011
(51) Int. Cl.: H04W 4/22, H04W 80/06

(54) **MOBILE COMMUNICATION SYSTEM**

(30) Priority: 08.11.2010 JP 2010250108
(71) Applicant: NTT DOCOMO, INC., Chiyoda-ku Tokyo 100-6150 (JP)
(72) Inventor: HAPSARI, Wuri Andarmawanti, Tokyo 100-6150 (JP); ZUKAWA, Hiroki, Tokyo 100-6150 (JP); YAMATO, Masahiro, Tokyo 100-6150 (JP)
(74) Representative: HOFFMANN EITLE
(86) International application number: PCT/JP2011/075309
(87) International publication number: WO 2012/063705

(57) **Abstract**

In a mobile communication system according to the present invention, a node #A and a node #Z are configured such that, when a call is generated by a mobile station UE subordinate to the node #A, one of the preset SCTP streams is assigned to the mobile station UE in a round robin manner regardless of whether the call is an emergency call or a normal call.

## Description

### [Technical Field]

The present invention relates to a mobile communication system.

### [Background Art]

An LTE (Long Term Evolution) mobile communication system is configured such that a communication between a first node (for example, a radio base station eNB) and a second node (for example, a mobile management node MME and a radio base station eNB) is performed by using SCTP (Stream Control Transmission Protocol).

### [Citation List]

### [Non Patent Literature]

[NPL 1] 3GPP TS36.412 Chapter 7

### [Patent Literature]

[PTL 1] Japanese Unexamined Patent Application Publication No. 2010-87990 (Japanese Application No. 2008-256681)

### [Summary of Invention]

### [Technical Problem]

Here, in an actual operation, it is necessary to perform a priority control with distinguishing an S1AP signal and an X2AP signal for an emergency call from an S1AP signal and an X2AP signal for a normal call (non-emergency call).

The reason why it is necessary is to prevent the occurrence of an event that processing for the emergency call is not performed as long as processing for the normal call is not terminated when the emergency call and the normal call are processed on the same SCTP stream, that is, "Head of Line Blocking".

However, there is a problem that the performance of the above described priority control is not regulated in the existing LET mobile communication system.

Therefore, the present invention has been achieved in view of the above described problem, and an object thereof is to provide a mobile communication system with which it is possible to perform the priority control with distinguishing the S1AP signal and the X2AP signal for the emergency call from the S1AP signal and the X2AP signal for the normal call in an SCTP layer.

### [Solution to Problem]

A first characteristic of the present invention is summarized in that a mobile communication system configured such that one or a plurality of SCTP (Stream Control Transmission Protocol) streams are set between a first node and a second node, wherein the first node and the second node are configured such that one of the preset SCTP streams is assigned to the mobile station in a round robin manner regardless of whether a call is an emergency call or a normal call when the call by a mobile station subordinate to the first node is generated.

A second characteristic of the present invention is summarized in that a mobile communication system configured such that one or a plurality of SCTP streams are set between a first node and a second node, wherein the first node and the second node are configured such that the SCTP stream having the smallest number of assigned mobile stations among the preset SCTP streams is assigned to the mobile station regardless of whether a call is an emergency call or a normal call when the call by a mobile station subordinate to the first node is generated.

A third characteristic of the present invention is summarized in that a mobile communication system configured such that one or a plurality of SCTP streams are set between a first node and a second node, wherein the first node and the second node are configured such that the preset SCTP streams are managed so as to be divided into an emergency SCTP stream assignable to a mobile station that performs an emergency call and a normal SCTP stream assignable to a mobile station that performs a normal call, the first node and the second node are configured such that one of the emergency SCTP streams is assigned to the first mobile station when an emergency call by the first mobile station subordinate to the first node is generated, and the first node and the second node are configured such that one of the normal SCTP streams is assigned to the second mobile station when a normal call by the second mobile station subordinate to the first node is generated.

A fourth characteristic of the present invention is summarized in that a mobile communication system configured such that one or a plurality of SCTP streams are set between a first node and a second node, wherein the first node and the second node manage SCTP streams assignable to a mobile station among the SCTP streams, the first node and the second node are configured such that the SCTP stream having the smallest number of assigned mobile stations among the assignable SCTP streams is assigned to the mobile station when a call by the mobile station subordinate to the first node is generated, and the first node and the second node are configured such that the number of assignable SCTP streams is increased when an initial emergency call is generated.

### [Advantageous Effects of Invention]

As described above, according to the present invention, it is possible to provide a mobile communication system with which it is possible to perform the priority control with distinguishing the S1AP signal and the X2AP signal for the emergency call from the S1AP signal and the X2AP signal for the normal call in the SCTP layer.

### [Brief Description of Drawings]

[Fig. 1] Fig. 1 is a diagram illustrating a protocol stack of each node in a mobile communication system according to a first embodiment of the present invention.
[Fig. 2] Fig. 2 is a diagram explaining an "SCTP Association" used in the mobile communication system according to the first embodiment of the present invention.
[Fig. 3] Fig. 3 is a diagram illustrating an example of an assignment algorithm of the SCTP stream used in the mobile communication system according to the first embodiment of the present invention.
[Fig. 4] Fig. 4 is a diagram illustrating an example of the assignment algorithm of the SCTP stream used in the mobile communication system according to the first embodiment of the present invention.
[Fig. 5] Fig. 5 is a diagram illustrating an example of the assignment algorithm of the SCTP stream used in the mobile communication system according to the first embodiment of the present invention.
[Fig. 6] Fig. 6 is a diagram illustrating an example of the assignment algorithm of the SCTP stream used in the mobile communication system according to the first embodiment of the present invention.

### [Description of Embodiments]

### (Mobile communication system according to first embodiment of the present invention)

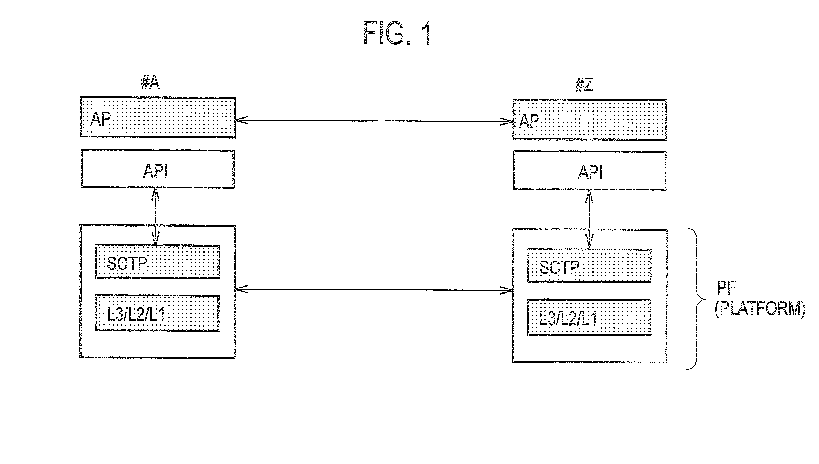

A mobile communication system according to a first embodiment of the present invention will be described with reference to Fig. 1 to Fig. 6. In the present embodiment, an LTE mobile communication system will be exemplified and described as the mobile communication system according to the present embodiment. However, the present invention is also applicable to mobile communication systems other than the LTE mobile communication system.

As illustrated in Fig. 1, the mobile communication system according to the present embodiment is configured such that a communication is performed between a node (an end point) #A and a node (an end point) #Z by using an AP (Application Protocol) layer, an SCTP layer lower than the AP layer, and L1/L2/L3 layers lower than the SCTP layer.

Here, the SCTP layer and the L1/L2/L3 layers are generally called "PF (platform)".

Further, a communication is configured to be performed between the AP layer and the SCTP layer through an API (AP Interface) within the node #A and the node #Z.

Further, a combination of the node #A and the node #Z may be the combination of radio base stations eNB themselves or the combination of the radio base station eNB and the mobile management node MME.

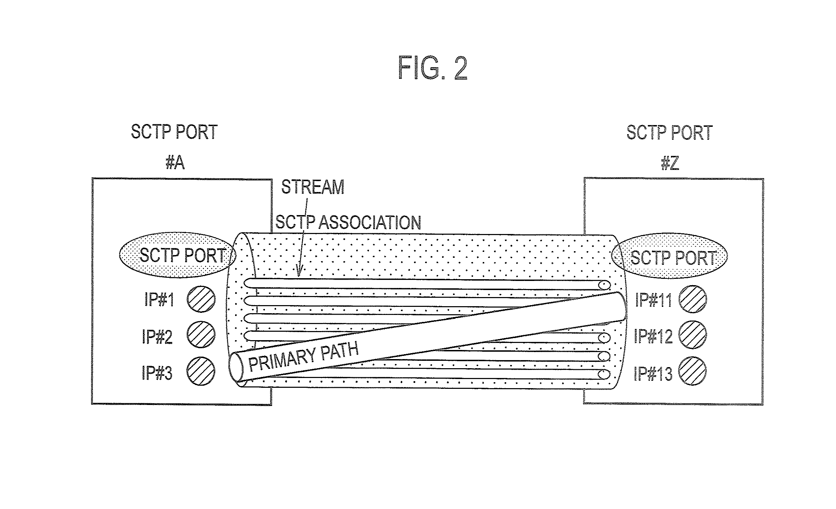

The mobile communication system according to the present embodiment, as illustrated in Fig. 2, is configured such that an "SCTP Association" is set between the SCTP layer of the node #A and the SCTP layer of the node #Z.

Here, when "Multihoming" is applied in the "SCTP Association", the SCTP layer of the node #A as a transmission side node can include one or a plurality of transmission side IP addresses (Source IP Addresses), and the SCTP layer of the node #Z as a reception side node can include one or a plurality of reception side IP addresses (Destination IP addresses).

In the example of Fig. 2, the node #A includes a plurality of transmission side IP addresses IP#1 to IP#3, and the node #Z includes a plurality of transmission side IP address IP#11 to IP#13 in the "SCTP Association".

Consequently, when the above described "Multihoming" is applied, that is, when the node #A and the node #Z include a plurality of IP addresses, respectively, the communication can be performed by using the plurality of IP addresses in one "SCTP Association". That is, a plurality of physical paths can be set.

Here, the plurality of physical paths are configured to be set by each of the transmission side IP addresses (IP#1 to IP#3) and each of the reception side IP addresses (IP#11 to IP#13).

Note that, when the "Multihoming" is set, a Primary Path to be used by default is configured to be decided among the plurality of physical paths which constitute each of the "SCTP Associations".

Further, one or a plurality of SCTP streams are configured to be set between the node #A and the node #Z within the "SCTP Association".

Further, when a call by a mobile station UE subordinate to the node #A is generated in the node #A, the AP layer is configured to notify the SCTP layer through the API whether or not the call is the emergency call by using an indicator and a predetermined bit.

Further, the SCTP layer is configured to perform an assignment control of the SCTP stream for the above described call by using a predetermined algorithm in the node #A and the node #Z.

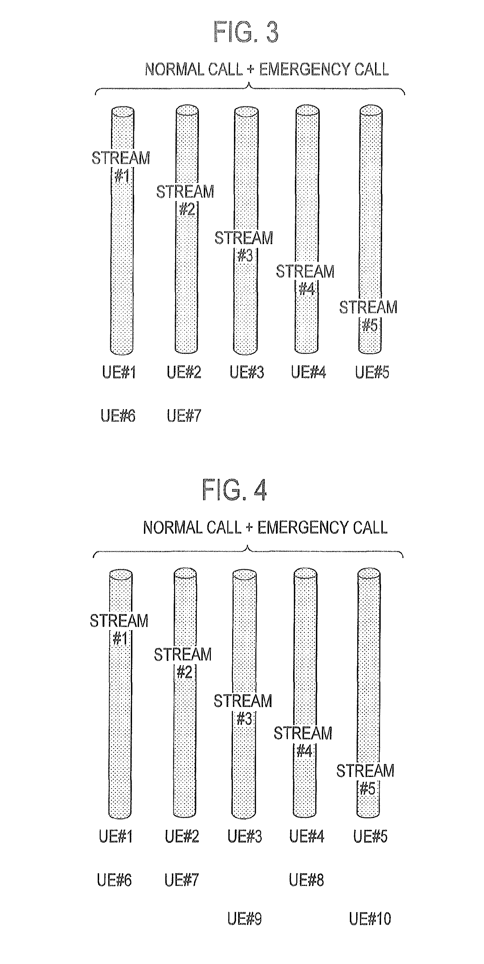

An example of the assignment control of the SCTP stream performed in the node #A and the node #Z will be described below with reference to Figs. 3 to 6.

Here, in the examples of Figs. 3 to 6, a call by a mobile station UE#1, a call by a mobile station UE#2, a call by a mobile station UE#3, a call by a mobile station UE#4, a call by a mobile station UE#5, a call by a mobile station UE#6, and a call by a mobile station UE#7 are generated in this order.

Further, in the examples of Figs. 3 to 6, the call by the mobile station UE#4 is terminated after the call by the mobile station UE#7 is generated.

Note that the SCTP streams #1 to #5 are set between the node #A and the node #Z.

### <Algorithm 1>

When the call by the mobile station UE subordinate to the node #A is generated if an algorithm 1 is used, the SCTP layer is configured such that one of the preset SCTP streams is assigned to the mobile station UE in a round robin manner regardless of whether the call is the emergency call or the normal call.

For example, the SCTP layer, as illustrated in Fig. 3, is configured such that an SCTP stream #1 is assigned to the mobile station UE#1, an SCTP stream #2 is assigned to the mobile station UE#2, an SCTP stream #3 is assigned to the mobile station UE#3, an SCTP stream #4 is assigned to the mobile station UE#4, an SCTP stream #5 is assigned to the mobile station UE#5, the SCTP stream #1 is assigned to the mobile station UE#6, and the SCTP stream #2 is assigned to the mobile station UE#7.

Since the algorithm 1 is a simple algorithm, when the SCTP layer uses the algorithm 1, a processing capacity necessary for the assignment control of the SCTP stream can be reduced.

### <Algorithm 2>

When the call by the mobile station UE subordinate to the node #A is generated if an algorithm 2 is used, the SCTP layer is configured such that the SCTP stream having the smallest number of assigned mobile stations UE among the preset SCTP streams is assigned to the mobile station UE regardless of whether the call is the emergency call or the normal call.

Here, as illustrated in Fig. 4, the SCTP layer is managed such that an emergency SCTP stream assignable to the mobile station that performs the emergency call and an normal SCTP stream assignable to the mobile station that performs the normal call become identical to each other.

For example, in the first place, the SCTP layer, as illustrated in Fig. 4, is configured such that, when the normal call by the mobile station UE#1 subordinate to the node #A is generated, the SCTP stream #1 having the smallest number of assigned mobile stations UE among the SCTP streams #1 to #5 is assigned to the mobile station UE#1.

Here, the SCTP layer is configured such that the SCTP stream #1 having a smallest identification number among the SCTP streams #1 to #5 (the number of assigned mobile stations UE: 0) having the smallest number of assigned mobile stations UE among the SCTP streams #1 to #5 is assigned to the mobile station UE#1.

Note that, similarly to such a case, when there exist a plurality of SCTP streams #1 to #5 as the SCTP streams having the smallest number of assigned mobile stations UE among the SCTP streams #1 to #5, the SCTP layer may be configured such that one of the SCTP streams #1 to #5 is assigned to the mobile station UE#1 according to a predetermined rule (for example, a rule giving a priority to the SCTP stream of a lower number and the SCTP stream of which the time assigned at last is older) .

In the second place, the SCTP layer is configured such that the SCTP stream #2 having the smallest number of assigned mobile stations UE among the SCTP streams #1 to #5 is assigned to the mobile station UE#2 when the normal call by the mobile station UE#2 subordinate to the node #A is generated.

In the third place, the SCTP layer is configured such that the SCTP stream #3 having the smallest number of assigned mobile stations UE among the SCTP streams #1 to #5 is assigned to the mobile station UE#3 when the emergency call by the mobile station UE#3 subordinate to the node #A is generated.

In the fourth place, the SCTP layer is configured such that the SCTP stream #4 having the smallest number of assigned mobile stations UE among the SCTP streams #1 to #5 is assigned to the mobile station #4 when the emergency call by the mobile station UE#4 subordinate to the node #A is generated.

In the fifth place, the SCTP layer is configured such that the SCTP stream #5 having the smallest number of assigned mobile stations UE among the SCTP streams #1 to #5 is assigned to the mobile station UE#5 when the emergency call by the mobile station UE#5 subordinate to the node #A is generated.

In the sixth place, the SCTP layer is configured such that the SCTP stream #1 having the smallest number of assigned mobile stations UE among the SCTP streams #1 to #5 is assigned to the mobile station UE#6 when the normal call by the mobile station UE#6 subordinate to the node #A is generated.

In the seventh place, the SCTP layer is configured such that the SCTP stream #2 having the smallest number of assigned mobile stations UE among the SCTP streams #1 to #5 is assigned to the mobile station UE#7 when the emergency call by the mobile station UE#7 subordinate to the node #A is generated.

In the eighth place, the SCTP layer is configured such that the SCTP stream #4 having the smallest number of assigned mobile stations UE among the SCTP streams #1 to #5 is assigned to the mobile station UE#8 when the normal call by the mobile station UE#8 subordinate to the node #A is generated since the emergency call by the mobile station UE#4 is terminated.

In the ninth place, the SCTP layer is configured such that the SCTP stream #3 having the smallest number of assigned mobile stations UE among the SCTP streams #1 to #5 is assigned to the mobile station UE#9 when the normal call by the mobile station UE#9 subordinate to the node #A is generated.

In the tenth place, the SCTP layer is configured such that the SCTP stream #5 having the smallest number of assigned mobile stations UE among the SCTP streams #1 to #5 is assigned to the mobile station UE#10 when the normal call by the mobile station UE#10 subordinate to the node #A is generated.

Here, the SCTP layer is configured such that the SCTP stream #5 of which the time assigned at last is old among the SCTP streams #4 and #5 (the number of assigned mobile stations UE: 1) having the smallest number of assigned mobile stations UE among the SCTP streams #1 and #5 is assigned to the mobile station UE#10.

When the algorithm 2 is used, since the SCTP layer can assign the SCTP stream having the smallest number of assigned mobile stations UE without distinguishing the emergency call from the normal call, the generation of the "Head of Line Blocking" can be avoided without performing complicated processing.

### <Algorithm 3>

When an algorithm 3 is used, the SCTP layer is configured such that one of the emergency SCTP streams is assigned to the mobile station UE when the emergency call by the mobile station UE subordinate to the node #A is generated.

Further, when the algorithm 3 is used, the SCTP layer is configured such that one of the normal SCTP streams is assigned to the mobile station UE when the normal call by the mobile station UE subordinate to the node #A is generated.

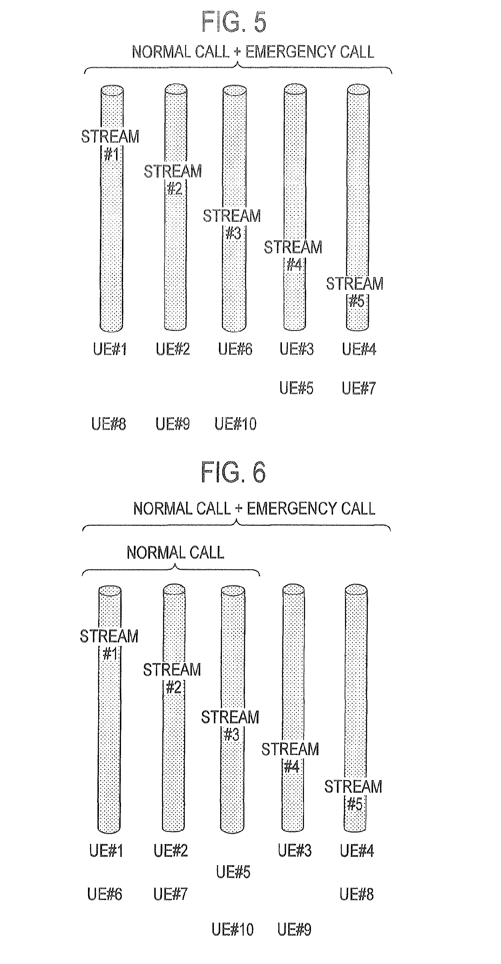

Here, the SCTP layer, as illustrated in Fig. 5, is configured such that the SCTP streams #1 to #5 are managed so as to be divided into the emergency SCTP streams #4 and #5 assignable to the mobile station UE that performs the emergency call and the normal SCTP streams #1 to #3 assignable to the mobile station UE that performs the normal call.

For example, in the first place, the SCTP layer, as illustrated in Fig. 5, is configured such that the normal SCTP stream #1 is assigned to the mobile station UE#1 when the normal call by the mobile station UE#1 subordinate to the node #A is generated.

Here, the SCTP layer is configured such that the normal SCTP stream #1 which is the normal SCTP stream having the smallest number of assigned mobile stations UE and having a smallest identification number among the normal SCTP streams #1 to #3 is assigned to the mobile station UE#1.

Note that, similarly to such a case, when there exist the plurality of normal SCTP streams #1 to #3, the SCTP layer may be configured such that one of the normal SCTP streams #1 to #3 is assigned to the mobile station UE#1 according to the predetermined rule (for example, the rule giving a priority to the normal SCTP stream having a smaller number of assigned mobile stations, the normal SCTP stream having a smallest identification number, and the SCTP stream of which the time assigned at last is older).

In the second place, the SCTP layer is configured such that the normal SCTP stream #2 is assigned to the mobile station UE#2 when the normal call by the mobile station UE#2 subordinate to the node #A is generated.

In the third place, the SCTP layer is configured such that the emergency SCTP stream #4 is assigned to the mobile station UE#3 when the emergency call by the mobile station UE#2 subordinate to the node #A is generated.

Here, the SCTP layer is configured such that the emergency SCTP stream #4 which is the emergency SCTP stream having the smallest number of assigned mobile stations UE and a smallest identification number among the emergency SCTP streams #4 and #5 is assigned to the mobile station UE#3.

Note that, similarly to such a case, when there exist the plurality of emergency SCTP streams #4 and #5, the SCTP layer may be configured such that one of the emergency SCTP streams #4 and #5 is assigned to the mobile station UE#3 according to the predetermined rule (for example, the rule giving a priority to the emergency SCTP stream having the smallest number of assigned mobile stations, the emergency SCTP stream having a smaller identification number, and the SCTP stream of which the time assigned at last is older).

In the fourth place, the SCTP layer is configured such that the emergency SCTP stream #5 is assigned to the mobile station UE#4 when the emergency call by the mobile station UE#4 subordinate to the node #A is generated.

In the fifth place, the SCTP layer is configured such that the emergency SCTP stream #4 is assigned to the mobile station UE#5 when the emergency call by the mobile station UE#5 subordinate to the node #A is generated.

In the sixth place, the SCTP layer is configured such that the normal SCTP stream #3 is assigned to the mobile station UE#6 when the normal call by the mobile station UE#6 subordinate to the node #A is generated.

In the seventh place, the SCTP layer is configured such that the emergency SCTP stream #5 is assigned to the mobile station UE#7 when the emergency call by the mobile station UE#7 subordinate to the node #A is generated.

When the algorithm 3 is used, the SCTP layer is capable of always assigning an available emergency SCTP stream to the mobile station UE that performs the emergency call, in a state in which the emergency call is not generated between the node #A and the node #Z.

Further, when the algorithm 3 is used, the SCTP layer can preferentially assign the SCTP stream to the mobile station that performs the emergency call even when the frequency of the normal call is high in case that the frequency of the emergency call is low.

### <Algorithm 4>

When an algorithm 4 is used, the SCTP layer is configured such that the SCTP stream having the smallest number of assigned mobile stations UE among the SCTP streams assignable to the mobile station UE is assigned when the call by the mobile station UE subordinate to the node #A is generated.

Here, the node #A and the node #Z manage the assignable SCTP streams, and are configured such that the number of the assignable SCTP streams is increased when an initial emergency call is generated.

In an example illustrated in Fig. 6, the assignable SCTP streams are the SCTP streams #1 to #3 when the emergency call is not generated, and the assignable SCTP streams are the SCTP streams #1 to #5 when the emergency call is generated.

For example, in the first place, the SCTP layer, as illustrated in Fig. 6, is configured such that the SCTP stream #1 having the smallest number of assigned mobile stations UE and having a smallest identification number among the assignable SCTP streams #1 to #3 is assigned to the mobile station UE#1 when the normal call by the mobile station UE#1 subordinate to the node #A is generated.

Note that, similarly to such a case, when the plurality of SCTP streams #1 to #3 are managed as the assignable SCTP streams, the SCTP layer may be configured such that one of the assignable SCTP streams #1 to #3 is assigned to the mobile station UE#1 according to the predetermined rule (for example, the rule giving a priority to the SCTP stream having the smallest number of assigned mobile stations, the SCTP stream having a smaller identification number, and the SCTP stream of which the time assigned at last is older).

In the second place, the SCTP layer is configured such that the SCTP stream #2 having the smallest number of assigned mobile stations UE and having a smallest identification number among the assignable SCTP streams #1 to #3 is assigned to the mobile station UE#2 when the normal call by the mobile station UE#2 subordinate to the node #A is generated.

In the third place, the SCTP layer is configured such that the SCPT stream #4 having the smallest number of assigned mobile stations UE among the assignable SCTP streams #1 to #4 obtained by increasing the number of assignable SCTP streams by one (that is, the SCTP streams #1 to #3 -> the SCTP streams #1 to #4) is assigned to the mobile station UE#3 when the emergency call by the mobile station UE#3 subordinate to the node #A is generated.

Here, the SCTP layer is configured such that the SCTP stream #4 newly added as the assignable SCTP stream among the SCTP streams #3 and #4 having the smallest number of assigned mobile stations UE among the assignable SCTP streams #1 to #4 is preferentially assigned to the mobile station UE#3 when the emergency call (an initial emergency call) by the mobile station UE#3 subordinate to the node #A is generated.

In the fourth place, the SCTP layer is configured such that the SCTP stream #5 having the smallest number of assignable mobile stations UE among the assignable SCTP streams #1 to #5 obtained by increasing the number of assignable SCTP streams by one (that is, the SCTP streams #1 to #4 -> the SCTP streams #1 to #5) is assigned to the mobile station UE #4 when the emergency call by the mobile station UE#4 subordinate to the node #A is generated.

Here, the SCTP layer is configured such that the SCTP stream #5 newly added as the assignable SCTP stream among the SCTP streams #3 and #5 having the smallest number of assigned mobile stations UE among the assignable SCTP streams #1 to #5 is preferentially assigned to the mobile station UE#4 when the emergency call by the mobile station UE#4 subordinate to the node #A is generated.

Note that the SCTP layer may increase the number of assignable SCTP streams by two (that is, the SCTP streams #1 to #3 -> the SCTP streams #1 to #5) when the emergency call by the mobile station UE#3 subordinate to the node #A is generated, and may not increase the number of assignable SCTP streams when the emergency call by the mobile station UE#4 subordinate to the node #A is generated.

In the fifth place, the SCTP layer is configured such that the SCTP stream #3 having the smallest number of assigned mobile stations UE among the assignable SCTP streams #1 to #5 is assigned to the mobile station UE#5 when the emergency call by the mobile station UE#5 subordinate to the node #A is generated.

In the sixth place, the SCTP layer is configured such that the SCTP stream #1 having the smallest number of assigned mobile stations UE and having a smallest identification number among the assignable SCTP streams #1 to #5 is assigned to the mobile station UE#6 when the normal call by the mobile station UE#6 subordinate to the node #A is generated.

In the seventh place, the SCTP layer is configured such that the SCTP stream #2 having the smallest number of assigned mobile stations UE and having a smallest identification number among the assignable SCTP streams #1 to #5 is assigned to the mobile station UE#7 when the emergency call by the mobile station UE#7 subordinate to the node #A is generated.

In the eighth place, the SCTP layer is configured to assign the SCTP stream #5 having the smallest number of assigned mobile stations UE and having a smallest identification number among the assignable SCTP streams #1 to #5 is assigned to the mobile station UE#8 when the normal call by the mobile station UE#8 subordinate to the node #A is generated since the emergency call by the mobile station UE#4 is terminated.

In the ninth place, the SCTP layer is configured such that the SCTP stream #4 having the smallest number of assigned mobile stations UE and having the time assigned at last being old among the assignable SCTP streams #1 to #5 is assigned to the mobile station UE#9 when the normal call by the mobile station UE#9 subordinate to the node #A is generated.

In the tenth place, the SCTP layer is configured such that the SCTP stream #4 having the smallest number of assigned mobile stations UE and having the time assigned at last being old among the assignable SCTP streams #1 to #5 is assigned to the mobile station UE#10 when the normal call by the mobile station UE#10 subordinate to the node #A is generated.

Note that the SCTP layer may not reduce the number of the assignable SCTP streams even when all emergency calls are terminated, and may restore the assignable SCTP streams to an initial state when all emergency calls are terminated.

When the algorithm 4 is used, the SCTP layer is capable of always assigning an available SCTP stream to the mobile station UE that performs the emergency call, in a state in which the emergency call is not generated between the node #A and the node #Z.

Further, when the algorithm 4 is used, the SCTP layer can assign the SCTP stream having the smallest number of assigned mobile stations UE even when the frequency of the emergency call increases.

Note that the SCTP layer can be applied to at least one of the above described algorithms 1 to 4. Note also that the SCTP layer can be applied to two or more among the above described algorithms 1 to 4, and may be configured such that an operator and the like can select as to which algorithm is to be applied.

The characteristics of the present embodiment as described above may be expressed as follows.

A first characteristic of the present embodiment is summarized in that a mobile communication system configured such that one or a plurality of SCTP (Stream Control Transmission Protocol) streams are set between a node #A (a first node) and a node #Z (a second node), wherein the node #A and the node #Z are configured such that one of the preset SCTP streams is assigned to the mobile station UE in a round robin manner regardless of whether a call is an emergency call or a normal call when the call by a mobile station UE subordinate to the node #A is generated.

A second characteristic of the present embodiment is summarized in that a mobile communication system configured such that one or a plurality of SCTP streams are set between a node #A and a node #Z, wherein the node #A and the node #Z are configured such that the SCTP stream having the smallest number of assigned mobile stations UE among the preset SCTP streams is assigned to the mobile station UE regardless of whether a call is an emergency call or a normal call when the call by a mobile station UE subordinate to the node #A is generated.

A third characteristic of the present embodiment is summarized in that a mobile communication system configured such that one or a plurality of SCTP streams are set between a node #A and a node #Z, wherein the node #A and the node #Z are configured such that the preset SCTP streams are managed so as to be divided into an emergency SCTP stream assignable to a mobile station UE that performs an emergency call and a normal SCTP stream assignable to a mobile station UE that performs a normal call, the node #A and the node #Z are configured such that one of the emergency SCTP streams is assigned to the first mobile station UE when an emergency call by the first mobile station UE subordinate to the node #A is generated, and the node #A and the node #Z are configured such that one of the normal SCTP streams is assigned to the second mobile station UE when a normal call by the second mobile station UE subordinate to the node #A is generated.

A fourth characteristic of the present embodiment is summarized in that a mobile communication system configured such that one or a plurality of SCTP streams are set between a node # A and a node #Z, wherein the node #A and the node #Z manage SCTP streams assignable to a mobile station UE among the SCTP streams, the node # A and the node #Z are configured such that the SCTP stream having the smallest number of assigned mobile stations UE among the assignable SCTP streams is assigned to the mobile station UE when a call by the mobile station UE subordinate to the node #A is generated, and the node #A and the node #Z are configured such that the number of assignable SCTP streams is increased when an initial emergency call is generated.

It should be noted that the operation of the node #A and node #Z may be performed by hardware, a software module performed by a processor, or a combination thereof.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the node #A or the node # Z. Furthermore, such a storage medium and processor may be arranged in the node #A or the node #Z as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

### [Reference Signs List]

#A, #Z ... Node

## Claims

1. A mobile communication system configured such that one or a plurality of SCTP (Stream Control Transmission Protocol) streams are set between a first node and a second node, wherein
the first node and the second node are configured such that one of the preset SCTP streams is assigned to the mobile station in a round robin manner regardless of whether a call is an emergency call or a normal call when the call by a mobile station subordinate to the first node is generated.

2. A mobile communication system configured such that one or a plurality of SCTP (Stream Control Transmission Protocol) streams are set between a first node and a second node, wherein
the first node and the second node are configured such that the SCTP stream having the smallest number of assigned mobile stations among the preset SCTP streams is assigned to the mobile station regardless of whether a call is an emergency call or a normal call when the call by a mobile station subordinate to the first node is generated.

3. A mobile communication system configured such that one or a plurality of SCTP (Stream Control Transmission Protocol) streams are set between a first node and a second node, wherein
the first node and the second node are configured such that the preset SCTP streams are managed so as to be divided into an emergency SCTP stream assignable to a mobile station that performs an emergency call and a normal SCTP stream assignable to a mobile station that performs a normal call,
the first node and the second node are configured such that one of the emergency SCTP streams is assigned to the first mobile station when an emergency call by the first mobile station subordinate to the first node is generated, and
the first node and the second node are configured such that one of the normal SCTP streams is assigned to the second mobile station when a normal call by the second mobile station subordinate to the first node is generated.

4. A mobile communication system configured such that one or a plurality of SCTP (Stream Control Transmission Protocol) streams are set between a first node and a second node, wherein
the first node and the second node manage SCTP streams assignable to a mobile station among the SCTP streams,
the first node and the second node are configured such that the SCTP stream having the smallest number of assigned mobile stations among the assignable SCTP streams is assigned to the mobile station when a call by the mobile station subordinate to the first node is generated, and
the first node and the second node are configured such that the number of assignable SCTP streams is increased when an initial emergency call is generated.
